# EUROPÄISCHE PATENTSCHRIFT

(11) **EP 2 374 199 B1**
(45) Veröffentlichungstag und Bekanntmachung des Hinweises auf die Patenterteilung: **28.05.2014**
(21) Anmeldenummer: 09760807.9
(22) Anmeldetag: 17.11.2009
(51) Int. Cl.: H02K 1/17

(54) **ELEKTRISCHE MASCHINE MIT EINEM POLRAD**
ELECTRIC MACHINE HAVING A ROTOR
MACHINE ÉLECTRIQUE AVEC ROTOR

(30) Priorität: 08.12.2008 DE 102008054381
(43) Veröffentlichungstag der Anmeldung: 12.10.2011
(73) Patentinhaber: Robert Bosch GmbH, 70442 Stuttgart (DE)
(72) Erfinder: MEYER, Reinhard, 74321 Bietigheim-Bissingen (DE); GREIF, Hubert, 71706 Markgroeningen (DE); REUTLINGER, Kurt, 70174 Stuttgart (DE); HEIDRICH, Markus, 71229 Leonberg (DE); RETANA HERNÁNDEZ, Roberto Carlos, 70180 Stuttgart (DE)
(86) Internationale Anmeldenummer: PCT/EP2009/065305
(87) Internationale Veröffentlichungsnummer: WO 2010/076081

(56) Entgegenhaltungen:
- JP-A- 11 155 248
- JP-A- 2002 233 085
- JP-A- 2007 110 873
- US-A- 3 330 975
- US-A- 4 998 084
- US-A1- 2003 214 194

## Beschreibung

Die Erfindung betrifft eine elektrische Transversalflussmaschine mit einem als Außenläufer oder Innenläufer ausgebildeten Polrad, das mindestens einen eine Längsachse aufweisenden Rückschlussring besitzt, an dem winkelversetzt Permanentmagnete mit alternierender Magnetpolung angeordnet sind.

### Stand der Technik

Elektrische Maschinen der genannten Art sind bekannt. Insbesondere Transversalflussmaschinen zeichnen sich durch einen hohen Wirkungsgrad wegen hoher Kupferausnutzung und einer hohen Drehmomentdichte aus. Ein Polrad der elektrischen Maschine kann als Rotor in Form eines Innenläufers oder Außenläufers ausgebildet sein. In Umfangsrichtung um das Polrad oder innerhalb des Polrads ist ein Stator der Transversalflussmaschine in Form mindestens einer ringförmigen Spule oder mindestens eines ringförmigen Magneten, vorgesehen. Die Pole des Polrads werden typischerweise von einer großen Anzahl kleiner Permanentmagnete oder durch einen großen Ringmagneten gebildet, der von einer großen Anzahl seinen magnetischen Fluss leitenden Klauen umgeben ist. Der magnetische Fluss von dem Polrad verläuft bei der Transversalflussmaschine transversal zur ringförmigen Spule. Die Transversalflussmaschine bildet eine elektrische Maschine, welche motorisch oder generatorisch betrieben werden kann.

Die Herstellung insbesondere von Transversalflussmaschinen ist aufgrund des Polrads sehr aufwendig, da eine große Zahl von Einzelteilen wegen der hohen benötigten Magnetpolanzahl montiert werden müssen. Bei dieser Montage sind die Permanentmagnete bereits polarisiert, da eine multipolare Magnetisierung des Polrads, das heißt eine abschnittsweise alternierende Magnetisierung nur bei einer kleinen Magnethöhe möglich ist. Eine Mehrphasigkeit der Transversalflussmaschine ist in axialer Richtung des Polrads möglich, indem mehrere Einzelsysteme (Phasen) in axialer Richtung aufeinandergeschichtet werden. Die Einzelsysteme müssen dabei in Umfangsrichtung zueinander versetzt werden, um eine gegenseitige Beeinflussung zu vermeiden. Die genaue Ausrichtung der Einzelsysteme ist sehr aufwendig.

Da sich wegen der hohen Polanzahl am Polrad viele Permanentmagnete auf kleinem Raum aneinanderreihen, die sich in ihrer Magnetpolung unterscheiden, ist eine Montage bereits magnetisierter Permanentmagnete ebenfalls sehr aufwendig.

Aufgabe der Erfindung ist es, eine elektrische Maschine bereitzustellen, die ein Polrad aufweist, welches auf einfache Weise hergestellt werden kann und gleichzeitig eine Anordnung stark magnetisierter Permanentmagnete für die Bereitstellung einer hohen Drehmomentdichte in der elektrischen Maschine ermöglicht.

Das Dokument US 3 330 975 offenbart eine elektrische Maschine gemäss dem Oberbegriff des Anspruchs 1.

### Offenbarung der Erfindung

Erfindungsgemäß ist vorgesehen, dass der Rückschlussring mindestens zwei axial aneinanderliegend zusammengefügte Rückschlussteilringe aufweist und dass die Permanentmagnete an einem Rückschlussteilring beim Zusammenfügen der beiden Rückschlussteilringe in den Lücken zwischen den Permanentmagneten des anderen Rückschlussteilrings liegen. Hierdurch wird in vorteilhafter Weise erreicht, dass bei einer Herstellung des Polrads zunächst Baugruppen, bestehend aus mindestens einem der Rückschlussteilringe und mindestens einem Permanentmagnet, zusammengefügt werden, welche eine einfache Herstellung erlauben. Abschließend werden die Baugruppen zu dem Polrad zusammengefügt. Somit weist jede Baugruppe für sich eine bestimmte Anzahl an Permanentmagneten auf, welche beabstandet zueinander an den Rückschlussteilringen angeordnet sind. Erst das zusammengefügte Polrad weist die alternierende Magnetpolung auf, sodass sich die gesamte Herstellung wesentlich vereinfacht. Das Polrad bildet insbesondere einen Rotor, welcher in oder um einen Stator rotiert, wobei zwischen dem Stator und dem Rotor ein Arbeitsluftspalt ausgebildet ist. Es ist vorzugsweise vorgesehen, dass die Permanentmagnete des Polrads derart angeordnet sind, dass sie an dem Arbeitsluftspalt innerhalb der elektrischen Maschine während ihres Betriebs angrenzen. In der vorliegenden Anmeldung wird unter einer elektrischen Maschine, insbesondere eine rotierende elektrische Maschine, d.h. eine elektrische Maschine, die einen Rotor aufweist, verstanden.

Nach einer Weiterbildung der Erfindung ist vorgesehen, dass die Permanentmagnete Zylindermagnete, insbesondere Rechteckzylindermagnete, sind. Die Verwendung von Zylindermagneten ermöglicht es, dass die Rückschlussteilringe mit den Permanentmagneten in einfacher Weise zusammengefügt werden können, ohne dass ein Verformen oder Verbiegen der Baugruppen notwendig ist. Weiter können Zylindermagnete in einfacher Weise hergestellt werden und sind einfach zu verarbeiten. Weiter ermöglichen Zylindermagnete eine besonders dichte Anordnung von Permanentmagneten an den Rückschlussteilringen. Unter den Rechteckzylindermagneten werden Magnete verstanden, die im wesentlichen quaderförmig ausgebildet sind. Es ist denkbar, die Permanentmagnete aus ferrimagnetischen keramischen Werkstoffen und/oder Seltenerd herzustellen.

Nach der Erfindung ist vorgesehen, dass die Rückschlussteilringe eine Verdrehsicherung und eine Zentriervorrichtung zu ihrem zueinander Positionieren aufweisen. Die Verdrehsicherung ist vorzugsweise derart ausgelegt, dass sich die Rückschlussteilringe in Umfangsrichtung nach einem Zusammenfügen der beiden Rückschlussteilringe nicht mehr zueinander in Umfangsrichtung verdrehen können. Dadurch wird verhindert, dass die Permanentmagnete des einen Rückschlussteilrings gegen die Permanentmagnete des anderen Rückschlussteilrings bei einer Verwendung des Polrads gepresst werden und eine Beschädigung des Polrads herbeiführen könnten. Die Zentriervorrichtung ist bei Herstellung des Polrads vorteilhaft, da sie ein einfaches, schnelles und sicheres Zusammenfügen der beiden Rückschlussteilringe in korrekter Lage der Rückschlussteilringe ermöglicht.

Nach einer Weiterbildung der Erfindung ist vorgesehen, dass die Verdrehsicherung und/oder die Zentriervorrichtung mindestens eine radiale Fixierzunge und/oder mindestens eine radiale Fixiernut an den Rückschlussteilringen aufweist. Die Fixierzunge und/oder die Fixiernut ist/sind vorzugsweise im Innenbereich der Rückschlussteilringe angeordnet. Sie dienen als Zentriervorrichtung indem sie als Markierung verwendet werden. In diesem Fall müssen die Baugruppen um die Längsachse verdreht werden, bis die Fixierzungen und/oder die Fixiernuten beider Rückschlussteilringe in Überdeckung zueinander gebracht sind. Dann ist ein korrektes Zusammenfügen der beiden Rückschlussteilringe möglich. Ferner können Fixierzungen und/oder Fixiernuten als Verdrehsicherung eingesetzt werden, indem sie mit einer Führungsschiene zusammenwirken, welche eine entsprechende Gegenfixiernut und/oder eine Gegenfixierzunge aufweist. Diese Führungsschiene kann entweder nur für Montagezwecke verwendet werden oder als Abtriebswelle der elektrischen Maschine ausgebildet sein.

Nach der Erfindung ist vorgesehen, dass die Verdrehsicherung und die Zentriervorrichtung von mindestens einem sich axial erstreckenden Zentrierdorn an einem der Rückschlussteilringe und mindestens einer dem Zentrierdorn zugeordneten Zentrieröffnung an dem anderen der Rückschlussteilringe gebildet wird. Als Verdrehsicherung besteht der Vorteil darin, dass sehr hohe Kräfte zwischen den Rückschlussteilringen übertragen werden können, ohne dass sich die Rückschlussteilringe in Umfangsrichtung zueinander verdrehen können. Ein Querschnitt - quer zu der Längserstreckung des Zentrierdorns - kann rund, aber auch vieleckig ausgebildet werden. Die vieleckige Ausbildung ermöglicht, dass ein einzelner Zentrierdorn die Verdrehung zwischen den Rückschlussteilringen verhindern kann. Bei Verwendung eines runden Querschnitts sind vorzugsweise zwei oder mehr Zentrierdorne mit entsprechender Zentrieröffnung anzuwenden. Bei Anwendung als Zentriervorrichtung bietet der Zentrierdorn die Möglichkeit, dass für das Zusammenfügen der Rückschlussteilringe, die Rückschlussteilringe zueinander nicht exakt ausgerichtet werden müssen, da durch Einführen des Zentrierdorns in die Zentrieröffnung die Rückschlussteilringe automatisch zueinander korrekt ausgerichtet werden.

Nach einer Weiterbildung der Erfindung ist vorgesehen, dass mindestens eines der Ringschlussrückteile aus mehreren Ringausschnittstücken zusammengesetzt ist. Dies bietet den Vorteil, dass der gesamte Rückschlussteilring in einzelnen kleinen Bauteilen gefertigt werden kann, um diese Bauteile anschließend zu einem Rückschlussteilring zusammenzusetzen. Dies geschieht vor einem Zusammenführen der Rückschlussteilringe zueinander.

Zudem ist es denkbar, die erfindungsgemäße elektrische Maschine ein- oder mehrphasig auszuführen. Bei einer mehrphasigen Ausführung werden eine Mehrzahl an Polrädern der genannten Art verwendet.

Die Erfindung betrifft weiter ein Verfahren zur Herstellung einer elektrischen Maschine, insbesondere Transversalflussmaschine, vorzugsweise nach der vorangegangenen Beschreibung, mit einem als Außenläufer oder Innenläufer ausgebildeten Polrad, das mindestens einen eine Längsachse aufweisenden Rückschlussring besitzt, an dem winkelversetzt Permanentmagnete mit alternierender Magnetpolung angeordnet sind, wobei folgende Schritte vorgesehen sind: Anordnen von magnetisierbaren Magnetflussstücken an mindestens zwei Rückschlussteilringen, Magnetisieren der Magnetflussstücke der Rückschlussteilringe zu Permanentmagneten jeweils mit gleichen Magnetpolungen, Ausrichten der Rückschlussteilringe mit den Permanentmagneten zueinander und Zusammenfügen der Rückschlussteilringe mit den Permanentmagneten zum Polrad, derart, dass die alternierende Magnetpolung gebildet wird. Durch die genannten Verfahrensschritte werden zunächst mindestens zwei Baugruppen geschaffen, die jeweils aus mindestens einem der Rückschlussteilringe und einem der Permanentmagnete bestehen und jede für sich mindestens bereichsweise magnetisiert wird. Diese Magnetisierung erfolgt baugruppenweise mit gleichen Magnetpolungen, woraus sich eine gleichsinnige Magnetisierungsrichtung für alle Permanentmagnete ergibt. Diese gleichsinnige Magnetisierungsrichtung führt zu einer starken Vereinfachung des Herstellungsverfahrens. Anschließend können die Baugruppen, also die Rückschlussteilringe mit den Permanentmagneten, zunächst zueinander ausgerichtet werden, um sie dann auf einfache Weise zusammenzufügen, sodass sich abschließend das Polrad mit der alternierenden Magnetpolung bildet. Das Zusammenfügen erfolgt insbesondere durch ein Zusammenschieben der Baugruppen zueinander. Während des Anordnens der magnetisierbaren Magnetflussstücke an den Rückschlussteilringen ist es insbesondere vorgesehen, dass die Magnetflussstücke an den Rückschlussteilringen befestigt werden. Es ist vorgesehen, dass das Zusammenfügen der Rückschlussteilringe derart erfolgt, dass sich die Rückschlussteilringe axial mit gegensätzlicher Polarisationsrichtung der Permanentmagnete ausgerichtet sind. Dies ermöglicht eine weitgehend gleiche Ausgestaltung der Baugruppen und damit eine gleichartige Magnetisierung der Baugruppen. In den vorliegenden Unterlagen wird unter einem Magnetflussstück ein Baueil verstanden, welches aus einem magnetisierbaren, hartmagnetischen Werkstoff besteht.

Nach einer Weiterbildung der Erfindung ist vorgesehen, dass die Magnetflussstücke in ihrer Längserstreckung axial an den Rückschlussteilringen angeordnet werden. Es ist besonders vorteilhaft, wenn die Längserstreckung der Magnetflussstücke vorzugsweise der axialen Erstreckung des Rückschlussrings entspricht.

Nach einer Weiterbildung der Erfindung ist vorgesehen, dass die Magnetflussstücke am Außenumfang und/oder am Innenumfang der Rückschlussteilringe angeordnet werden. Die Anordnung am Außen- und/oder am Innenumfang ermöglicht eine besonders nahe Anordnung der Magnetflussstücke - der späteren Permanentmagnete - an dem Arbeitsluftspalt zwischen dem Rotor und dem Stator. Bei Ausbildung der Magnetflussstücke derart, dass die Magnetflussstücke den Außen- und/oder den Innenrand der Rückschlussringteile axial überragen, dienen die Magnetflussstücke selbst als Halteelemente für das jeweils andere Rückschlussringteil. Aufgrund dieser Ausgestaltung ergibt sich für jede Baugruppe im Gesamten eine kronenartige Struktur. Durch das Zusammenfügen der Baugruppen greifen die kronenartigen Strukturen ineinander, wodurch zum Einen die alternierende Magnetpolung gebildet wird, und zum Anderen eine Verdrehung zwischen den Magnetflussstücke gebildet werden kann.

Nach einer Weiterbildung der Erfindung ist vorgesehen, dass die Magnetflussstücke mittels einer Halteschablone, insbesondere gleichzeitig, angeordnet werden. Besonderes vorteilhaft ist, dass die nicht magnetisierten Magnetflussstücke in einfacher Weise in einer Halteschablone angeordnet werden können und mittels der Halteschablone an den Rückschlussteilringen angeordnet werden können. Dabei ist vorzugsweise vorgesehen, dass die Halteschablone während eines Befestigens der Magnetflussstücke an den Rückschlussteilringen die Magnetflussstücke hält. Nach dem Anordnen der Magnetflussstücke an den Rückschlussteilringen wird die Halteschablone entfernt und somit als Montagehilfe verwendet. Auf diese Weise gelingt eine Reduktion des Arbeitsaufwands bei der Herstellung des Polrads, da die Magnetflussstücke gruppenweise angeordnet werden können, und nicht, wie im Stand der Technik, einzeln an dem Rückschlussring angeordnet werden müssen. Die Halteschablone ist vorzugsweise in Form eines Rechens oder einer Krone ausgebildet.

Nach einer Weiterbildung der Erfindung ist vorgesehen, dass die Magnetflussstücke jeweils eines der Rückschlussteilringe gleichzeitig magnetisiert werden. In dieser vorteilhaften Weiterbildung werden sämtliche Magnetflussstücke eines einzelnen Rückschlussteilrings gemeinsam gleichsinnig magnetisiert. Dies kann mittels einer einzigen Magnetisiervorrichtung in einem einzelnen Arbeitsschritt erfolgen. Dieser Vorteil ergibt sich daraus, dass die alternierende Magnetpolung erst nach dem Zusammenfügen der Baugruppen gebildet wird und somit keine multipolare Magnetisierung notwendig ist.

Nach einer Weiterbildung der Erfindung ist vorgesehen, dass die Rückschlussteilringe mit den magnetisierten Magnetflussstücken mittels einer Montagevorrichtung vor dem Zusammenfügen zueinander ausgerichtet werden. Aufgrund der hohen Anzahl der Magnetflussstücke und deren magnetischen Kräfte ist es notwendig, dass die Baugruppen für das Zusammenführen zueinander exakt ausgerichtet werden müssen um zu erreichen, dass die magnetisierten Magnetflussstücke - also die Permanentmagnete eines der Rückschlussteilringe - in die Lücken zwischen den Permanentmagneten des anderen Rückschlussteilrings eingebracht werden können. Hierfür kann in vorteilhafter Weise eine Montagevorrichtung vorgesehen sein, welche beide Baugruppen zunächst getrennt voneinander in korrekter Ausrichtung aufnimmt und die es ermöglicht, die Baugruppen zusammenzuführen.

Nach einer Weiterbildung der Erfindung ist vorgesehen, dass als Montagevorrichtung mindestens eine Zentriervorrichtung verwendet wird.

Nach einer Weiterbildung der Erfindung ist vorgesehen, dass als Montagevorrichtung ein in Umfangsrichtung Führungsnuten für die Magnetflussstücke aufweisender Führungsring verwendet wird. Der Führungsring ist derart gestaltet, dass eine Baugruppe von einer Seite in oder auf den Ring aufgeschoben werden kann, wobei die magnetisierten Magnetflussstücke von den Führungsnuten bereichsweise aufgenommen werden und somit die Baugruppe führen. In gleicher Weise kann eine weitere Baugruppe von der anderen Seite des Führungsrings aufgenommen werden und die Baugruppen können in oder auf den Führungsring durch ein Zusammenschieben in axialer Richtung des Führungsrings zusammengefügt werden.

Die Zeichnungen veranschaulichen die Erfindung anhand eines Ausführungsbeispiels, und zwar zeigt:
- Figur 1: auschnittsweise ein Polrad in perspektivischer Ansicht,
- Figur 2: auschnittsweise das Polrad der Figur 1 bei einem Zusammenführen,
- Figur 3: ein Anordnen von Magnetflussstücken an Rückschlussteilringen,
- Figur 4: eine alternative Ausführungsform des Polrads,
- Figur 5: zwei Rückschlussteilringe mit Zentrierdorn und Zentrieröffnung,
- Figur 6: ein Zusammenführen zweier Rückschlussteilringe und deren Permanentmagneten innerhalb eines Führungsrings,
- Figur 7: einen ersten Rückschlussteilring mit einer Fixierzunge,
- Figur 8: einen zweiten Rückschlussteilring mit einer Fixierzunge,
- Figur 9: auschnittsweise eine weitere Ausführungsform eines weiteren ersten Rückschlussteilrings mit einer Fixierzunge und
- Figur 10: auschnittsweise eine weitere Ausführungsform eines weiteren zweiten Rückschlussteilrings mit einer Fixierzunge.

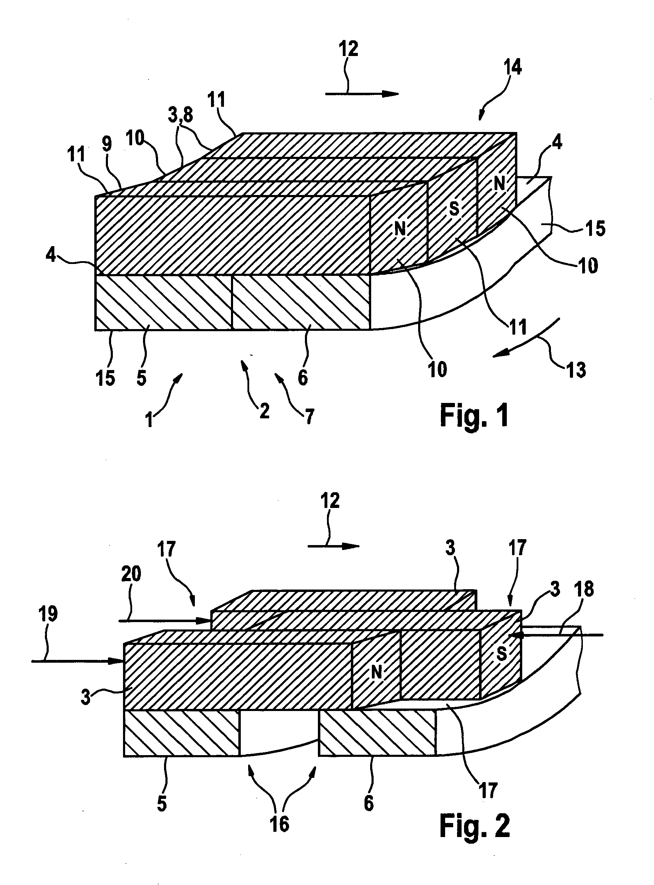

Die Figur 1 zeigt auschnittsweise ein Polrad 1 einer nicht dargestellten elektrischen Maschine in Form einer Transversalflussmaschine. Das Polrad 1 ist als Außenläufer 2 ausgebildet. Die Ausbildung als Außenläufer 2 ergibt sich aus einer Anordnung von Permanentmagneten 3 auf Innenumfängen 4 zweier Rückschlussteilringe 5 und 6. Die Rückschlussteilringe 5 und 6 bilden gemeinsam einen Rückschlussring 7. Die Permanentmagnete 3 sind als Zylindermagnete 8 in Form von Rechteckzylindermagneten 9 ausgebildet. Jeder der Permanentmagneten 3 weist einen Nordpol 10 sowie einen Südpol 11 auf. Die Permanentmagnete 3 sind mit ihrer Längserstreckung in axialer Richtung, welcher der Richtung eines Pfeils 12 entspricht angeordnet und bilden in Umfangsrichtung, welche der Richtung eines Pfeils 13 entspricht, eine alternierende Magnetpolung 14. Die Rückschlussteilringe 5 und 6 und der Rückschlussring 7 sind jeweils kreisrohrförmig ausgeführt. Eine Ausbildung des Polrads 1 als Innenläufer ist dadurch erreichbar, dass die Permanentmagnete 3 an Außenumfängen 15 der Rückschlussteilringe (5,6) angeordnet werden. Die Ausbildung als Innenläufer ist in Figur 1 nicht dargestellt.

Die Figur 2 zeigt die Rückschlussteilringe 5 und 6 der Figur 1 nebst dem Permanentmagneten 3 mit all ihren Merkmalen. Im Unterschied zu Figur 2 sind die Rückschlussteilringe 5 und 6 nur teilweise zum Polrad 1 zusammengefügt. Figur 2 verdeutlicht, wie das Zusammenfügen der von den Permanentmagneten 3 mit den Rückschlussteilringen 5 und 6 gebildeten Baugruppen 16 erfolgt. Dabei werden die Baugruppen 16 in axialer Richtung aufeinander geschoben, wobei die Permanentmagnete 3 in Lücken 17 des jeweils anderen Rückschlussteilrings 5 oder 6 geschoben werden. Dies geschieht in Richtung von Pfeilen 18, 19 und 20. Es wird deutlich, dass jede Baugruppe 16 Permanentmagnete 3 mit gleich ausgerichteten Nordpolen 10 und Südpolen 11 aufweisen. Somit ergibt sich die alternierende Magnetpolung 14 der Figur 1 erst durch das Zusammenfügen der Baugruppen 16, also der Rückschlussteilringe 5 und 6 mit ihren Permanentmagneten 3.

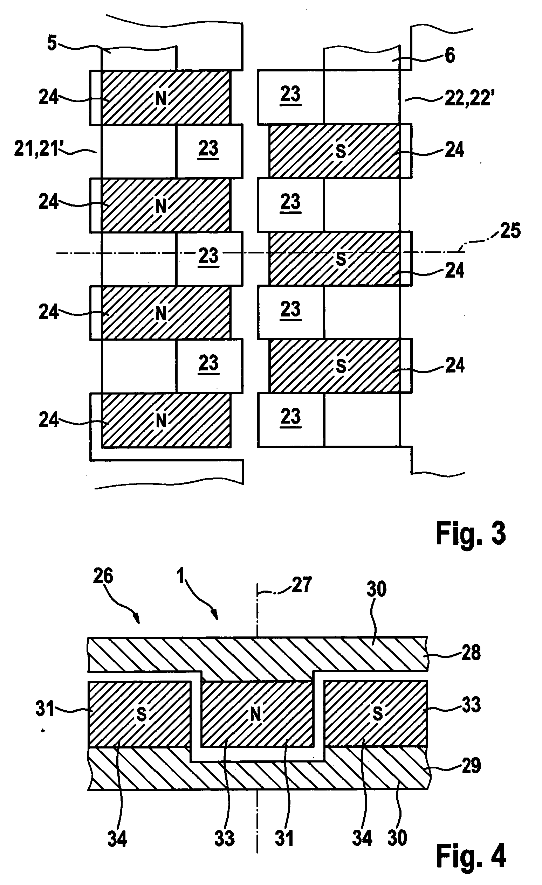

Die Figur 3 zeigt ausschnittsweise die Rückschlussteilringe 5 und 6 der Figur 1 in einer Seitenansicht. Den Rückschlussteilringen 5 und 6 ist jeweils eine Halteschablone 21 oder 22 zugeordnet, welche ebenfalls ausschnittsweise in der Seitenansicht dargestellt sind. Die Halteschablonen 21 und 22 erstrecken sich um die Rückschlussteilringe 5 oder 6 herum, sind kronenartig ausgebildet und weisen Führungszapfen 23 auf. Zwischen zwei Führungszapfen 23 jeweils einer Halteschablone 21 oder 22 ist ein magnetisierbares Magnetflussstück 24 angeordnet. Die Magnetflussstücke 24 werden von den Halteschablonen 21 oder 22 an den ihnen zugeordneten Rückschlussteilringen 5 oder 6 gehalten, um sie an den Rückschlussteilringen 5 oder 6 anzuordnen. Insbesondere ist vorgesehen, dass die Magnetflussstücke 24 in der dargestellten Position an den Rückschlussteilringen 5 und 6 befestigt werden. Die Rückschlussteilringe 5 und 6 weisen eine Längsachse 25 auf, um die sich die Rückschlussteilringe 5 und 6 rotationssymmetrisch erstrecken. In Abhängigkeit der Ausgestaltung der Rückschlussteilringe 5 oder 6 können die Halteschablonen als Krone 21' und 22' oder als Rechen ausgebildet sein Bei den Halteschablonen 21 und 22 handelt es sich um Montagehilfen, welche nach dem Anordnen der Magnetflussstücke 24 an den Rückschlussteilringen 5 und 6 entfernt werden. Aufgrund der Ausgestaltung der Montagehilfen werden die Magnetflussstücke 24 korrekt positioniert und in ihrer Längserstreckung in axialer Richtung ausgerichtet. Weiter zeigt die Figur 3 eine alternative, radiale Magnetpolausrichtung.

Die Figur 4 zeigt ausschnittsweise eine alternative Ausführungsform 26 des Polrads 1 mit einer Längsachse 27 und Rückschlussteilringen 28 und 29. Die Rückschlussteilringe 28 und 29 sind in axialer Richtung, also der Richtung der Längsachse 27, derart profiliert, dass die Rückschlussteilringe 28 und 29 nach einem Zusammenfügen ineinandergreifen. An einem Außenumfang 30 der Rückschlussteilringe 28 und 29 sind jeweils Permanentmagnete 31 aufgebracht, welche in Umfangsrichtung um die Längsachse 27 eine alternierende Magnetpolung 32 bilden. Die Permanentmagnete 31 weisen Nordpole 33 und Südpole 34 auf, welche eine radiale Magnetpolausrichtung aufweisen können.

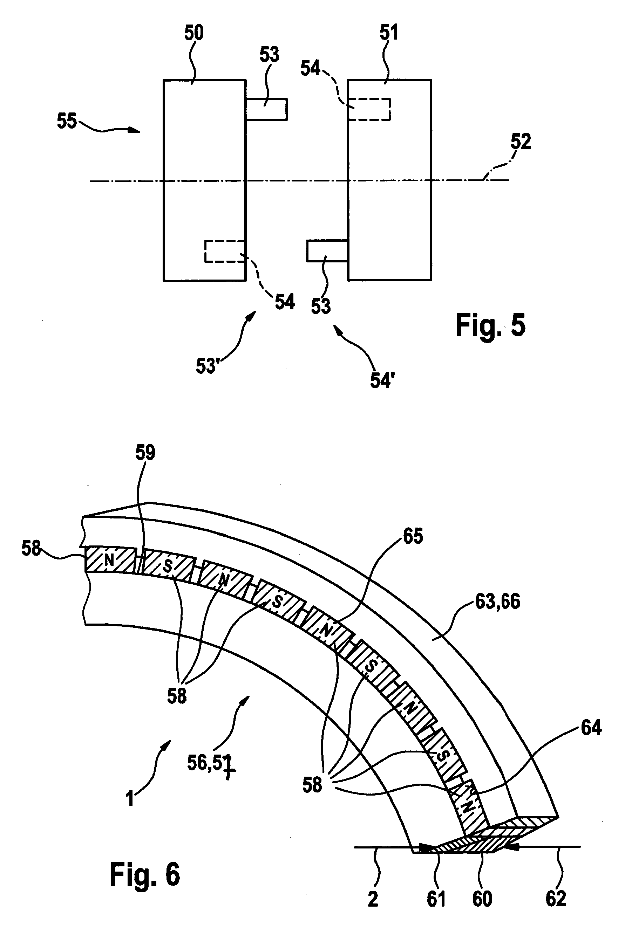

Die Figur 5 zeigt zwei Rückschlussteilringe 50 und 51, welche axial entlang einer Längsachse 52 angeordnet sind. Die Rückschlussteilringe 50 und 51 weisen jeweils einen Zentrierdorn 53 und eine Zentrieröffnung 54 auf. Jede der Zentrierdornen 53 ist der entsprechenden Zentrieröffnung 54 des anderen Rückschlussteilrings 50 oder 51 zugeordnet. Durch ein Zusammenführen der Rückschlussteilringe 50 und 51 entlang eines Pfeils 55 werden die Zentrierdornen 53 in die Zentrieröffnung 54 eingebracht. Sie bilden dann zum einen eine Verdrehsicherung 53' in Umfangsrichtung um die Längsachse 52 und gleichzeitig eine Zentriervorrichtung 54', da durch das Zusammenführen die Rückschlussteilringe 50 und 51 zueinander ausgerichtet werden.

Die Figur 6 zeigt eine weitere Ausführungsform 56 eines Polrads 1, welches als Innenläufer 57 ausgebildet ist, indem Permanentmagnete 58 an einer Außenfläche 59 des Polrads 1 angeordnet sind. Das Polrad 1 besteht aus zwei Rückschlussteilringen 60 und 61, die entlang von Pfeilen 62 zusammengefügt werden. Um dieses Zusammenfügen zu erleichtern, ist ein Führungsring 63 vorgesehen, welcher axiale Führungsnuten 64 aufweist, welche an einem Innenumfang 65 des Führungsrings 63 ausgebildet sind. Die Führungsnuten 64 weisen in Umfangsrichtung eine Erstreckung auf, die einer Erstreckung der Permanentmagneten 58 in Umfangsrichtung entspricht. Dadurch können die Permanentmagnete 58 jeder der Rückschlussteilringe 61 und 60 spielfrei in dem Führungsring 63 geführt werden. Somit ist es möglich, den Rückschlussteilring 62 mit seinen Permanentmagneten 58 von einer axialen Seite des Führungsrings 63 ein- oder aufzusetzen und den Rückschlussteilring 61 mit seinen Permanentmagneten 58 von der anderen axialen Seite des Führungsrings 63 ein- oder aufzusetzen. Danach können die Rückschlussteilringe 61 und 60 mit ihren Permanentmagneten 58 ineinander verschoben und somit zusammengefügt werden. Bei dem Führungsring 63 handelt es sich um eine Montagevorrichtung 66, welche nach der Montage entfernt wird und nicht für den Betrieb des Polrads 1 benötigt wird.

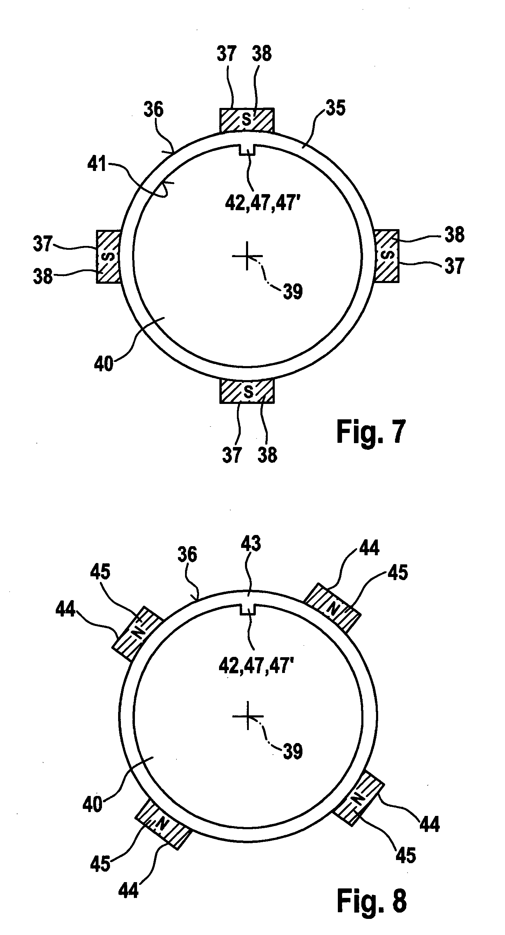

Die Figur 7 zeigt einen Rückschlussteilring 35 mit auf einem Außenumfang 36 angeordneten Permanentmagneten 37. Die Permanentmagnete 37 weisen jeweils einen Südpol 38 auf. Der zum Südpol 38 zugehörige Nordpol ist in Richtung einer Längsachse 39, welche sich orthogonal zur Papierebene erstreckt, unterhalb des Südpols 38 angeordnet. An einem eine Ringöffnung 40 bildenden Innenumfang 41 des Rückschlussteilrings 35 ist eine Fixierzunge 42 ausgebildet. Die Fixierzunge 42 ragt radial in die Ringöffnung 40 hinein.

Die Figur 8 zeigt einen Rückschlussteilring 43, welcher dem Rückschlussteilring 35 der Figur 7 zugeordnet ist. Der Rückschlussteilring 43 weist die gleichen Merkmale auf wie der Rückschlussteilring 35 der Figur 7. Die Figuren 7 und 8 unterscheiden sich dadurch, dass am Außenumfang 36 des Schlussteilrings 43 Permanentmagnete 44 angeordnet sind, welche an ihrer in der Darstellung sichtbaren Seite einen Nordpol 45 aufweisen. Die den Nordpolen 45 zugehörigen Südpole sind unterhalb der Nordpole 45 in Richtung der Längsachse 39 angeordnet. Die Permanentmagnete 44 sind gegenüber den Permanentmagneten 38 des Rückschlussteilrings 35 der Figur 7 winkelversetzt.

Ein Zusammenfügen der Rückschlussteilringe 35 und 43 mitsamt den Permanentmagneten 38 und 44 führt dazu, dass die alternierende Magnetpolung 14 gebildet wird. Die Fixierzunge 42 dient dabei als Zentriervorrichtung 47. Die Fixierzungen 42 werden als Markierungen 46 verwendet, die in axialer Richtung miteinander in Überdeckung zu bringen sind, wodurch sich eine korrekte Ausrichtung der Rückschlussteilringe 35 und 43 zueinander ergibt. Insbesondere werden dadurch die Permanentmagnete 44 und 37 korrekt winkelversetzt zueinander angeordnet. Ferner besteht die Möglichkeit, dass die Fixierzungen 42 für ein Ausrichten an einer Führungsschiene, welche hier nicht dargestellt ist, verwendet werden. Die Führungsschiene wird in die Ringöffnung 40 eingesteckt und weist eine der Fixierzunge 42 zugeordnete Gegenfixiernut auf, welche die Rückschlussteilringe 35 und 43 korrekt orientiert. Weiter können die Fixierzungen 42 als Verdrehsicherung 47' verwendet werden, indem sie mit der Führungsschiene zusammenwirken, die als Abtriebswelle der Transversalflussmaschine ausgebildet ist. Die Abtriebswelle weist vorzugsweise als Durchmesser den Innendurchmesser der Rückschlussteilringe 35 und 43 auf und besitzt eine Gegenfixiernut zur Aufnahme der Fixierzungen 42. Die Abtriebswelle wird zum Sichern der Rückschlussteilringe 35 und 43 in die Ringöffnung 40 eingesteckt

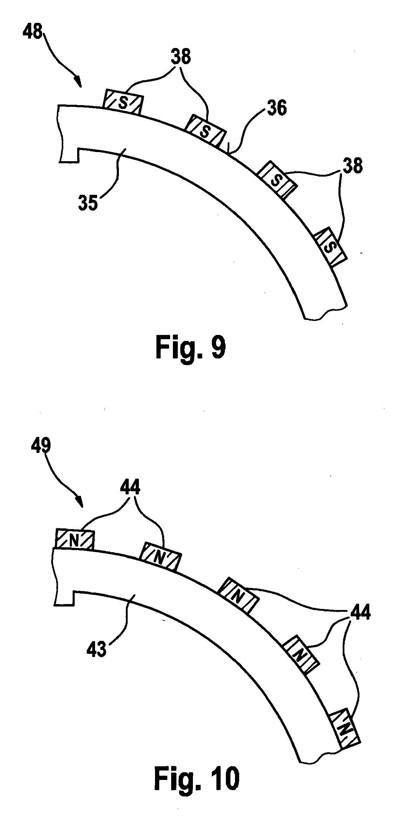

Die Figur 9 zeigt auschnittsweise eine weitere Ausführungsform 48 des Rückschlussteilrings 35 der Figur 7. Die Ausführungsform 48 unterscheidet sich von dem Rückschlussteilring 35 dadurch, dass eine größere Anzahl kleinerer Permanentmagneten 38 am Außenumfang 36 angeordnet sind.

Die Figur 10 zeigt auschnittsweise eine weitere Ausführungsform 49 des Rückschlussteilrings 43 mit Permanentmagneten 44 der Figur 8 mit all ihren Merkmalen. Der Rückschlussteilring 43 ist dem Rückschlussteilring 35 der Figur 9 zugeordnet. Die Ausführungsform 49 unterscheidet sich von der in Figur 8 dargestellten Ausführungsform durch eine größere Anzahl von kleineren Permanentmagneten 44 aus.

## Patentansprüche

1. Elektrische Transversalflussmaschine mit einem als Außenläufer (2) oder Innenläufer (57) ausgebildeten Polrad (1), das mindestens einen eine Längsachse (27, 39, 52) aufweisenden Rückschlussring (7) besitzt, an dem winkelversetzt Permanentmagnete (3, 31, 44, 58) mit alternierender Magnetpolung (14, 32) angeordnet sind, wobei der Rückschlussring (7) mindestens zwei axial aneinanderliegend zusammengefügte Rückschlussteilringe (50, 51) aufweist, und dass die Permanentmagnete (3, 31, 44, 58) an einem Rückschlussteilring (50, 51) beim Zusammenfügen der beiden Rückschlussteilringe (50, 51) in den Lücken (17) zwischen den Permanentmagneten (3, 31, 44, 58) des anderen Rückschlussteilrings (50, 51) liegen, **dadurch gekennzeichnet, dass** die Rückschlussteilringe (50, 51) eine Verdrehsicherung (53') und eine Zentriervorrichtung (54') zu ihrem zueinander Positionieren aufweisen, und wobei die Verdrehsicherung (53') und die Zentriervorrichtung (54') von einem sich axial erstreckenden Zentrierdorn (53) an jeweils einem der Rückschlussteilringe (50, 51) und einer dem jeweiligen Zentrierdorn (53) zugeordneten Zentrieröffnung (54) an dem jeweils anderen der Rückschlussteilringe (50, 51) gebildet wird.

2. Elektrische Maschine nach Anspruch 1, **dadurch gekennzeichnet, dass** die Permanentmagnete (3, 31, 44, 58) Zylindermagnete (8), insbesondere Rechteckzylindermagnete (9), sind.

3. Elektrische Maschine nach einem der vorhergehenden Ansprüche, **dadurch gekennzeichnet, dass** mindestens eines der Rückschlussteilringe (50, 51) aus mehreren Ringausschnittstücken zusammengesetzt ist.

4. Verfahren zur Herstellung einer elektrischen Transversalflussmaschine nach einem oder mehreren der vorhergehenden Ansprüche, mit einem als Außenläufer (2) oder Innenläufer (57) ausgebildeten Polrad (1), das mindestens einen eine Längsachse (27, 39, 52) aufweisenden Rückschlussring (7) besitzt, an dem winkelversetzt Permanentmagnete (3, 31, 44, 58) mit alternierender Magnetpolung (14, 32) angeordnet sind, mit folgenden Schritten:
- Anordnen von magnetisierbaren Magnetflussstücken (24) an mindestens zwei Rückschlussteilringen (50, 51), wobei die Rückschlussteilringe (50, 51) eine Verdrehsicherung (53') und eine Zentriervorrichtung (54') zu ihrem zueinander Positionieren aufweisen, und wobei die Verdrehsicherung (53') und die Zentriervorrichtung (54') von einem sich axial erstreckenden Zentrierdorn (53) an jeweils einem der Rückschlussteilringe (50, 51) und einer dem jeweiligen Zentrierdorn (53) zugeordneten Zentrieröffnung (54) an dem jeweils anderen der Rückschlussteilringe (50, 51) gebildet wird,
- Magnetisieren der Magnetflussstücke (24) der Rückschlussteilringe (50, 51) zu Permanentmagneten (3, 31, 44, 58) jeweils mit gleichen Magnetpolungen,
- Ausrichten der Rückschlussteilringe (50, 51) mit den Permanentmagneten (3, 31, 44, 58) zueinander durch Einführen der Zentrierdorne (53) in die jeweilige Zentrieröffnung (54) und
- Zusammenfügen der Rückschlussteilringe (50, 51) mit den Permanentmagneten (3, 31, 44, 58) zum Polrad (1), derart, dass die alternierende Magnetpolung (14, 32) gebildet wird.

5. Verfahren nach Anspruch 4, **dadurch gekennzeichnet, dass** die Magnetflussstücke (24) in ihrer Längserstreckung axial an den Rückschlussteilringen (50, 51) angeordnet werden.

6. Verfahren nach einem der vorhergehenden Ansprüche, **dadurch gekennzeichnet, dass** die Magnetflussstücke (24) am Außenumfang (15, 59) und/oder am Innenumfang (4) der Rückschlussteilringe (50, 51) angeordnet werden.

7. Verfahren nach einem der vorhergehenden Ansprüche, **dadurch gekennzeichnet, dass** die Magnetflussstücke (24) mittels einer Halteschablone (21, 22), insbesondere gleichzeitig, angeordnet werden.

8. Verfahren nach einem der vorhergehenden Ansprüche, **dadurch gekennzeichnet, dass** die Magnetflussstücke (24) jeweils eines der Rückschlussteilringe (50, 51) gleichzeitig magnetisiert werden.

9. Verfahren nach einem der vorhergehenden Ansprüche, **dadurch gekennzeichnet, dass** die Rückschlussteilringe (50, 51) mit den magnetisierten Magnetflussstücken (24) mittels einer Montagevorrichtung (66) vor dem Zusammenfügen zueinander ausgerichtet werden.

10. Verfahren nach einem der vorhergehenden Ansprüche, **dadurch gekennzeichnet, dass** als Montagevorrichtung (66) mindestens eine Zentriervorrichtung verwendet wird.

11. Verfahren nach einem der vorhergehenden Ansprüche, **dadurch gekennzeichnet, dass** als Montagevorrichtung (66) ein in Umfangsrichtung Führungsnuten (64) für die Magnetflussstücke (24) aufweisender Führungsring (63) verwendet wird.

## Claims

1. Electrical transversal flux machine having a magnet wheel (1) which is in the form of an external rotor (2) or internal rotor (57) and has at least one magnetic return path ring (7) which has a longitudinal axis (27, 39, 52) and on which permanent magnets (3, 31, 44, 58) with alternating magnetic polarity (14, 32) are arranged with an angular offset, wherein the magnetic return path ring (7) has at least two magnetic return path ring elements (50, 51) which are joined such that they bear axially one against the other, and wherein the permanent magnets (3, 31, 44, 58) on a magnetic return path ring element (50, 51) lie in the gaps (17) between the permanent magnets (3, 31, 44, 58) of the other magnetic return path ring element (50, 51) when the two magnetic return path ring elements (50, 51) are joined, **characterized in that** the magnetic return path ring elements (50, 51) have a rotation-prevention means (53') and a centring apparatus. (54') in order to be positioned in relation to one another, and wherein the rotation-prevention means (53') and the centring apparatus (54') are formed by an axially extending centring mandrel (53) on in each case one of the magnetic return path ring elements (50, 51) and a centring opening (54), which is associated with the respective centring mandrel (53), on the respectively other one of the magnetic return path ring elements (50, 51).

2. Electrical machine according to Claim 1, **characterized in that** the permanent magnets (3, 31, 44, 58) are cylinder magnets (8), in particular rectangular cylinder magnets (9).

3. Electrical machine according to either of the preceding claims, **characterized in that** at least one of the magnetic return path ring elements (50, 51) is composed of a plurality of ring cutout pieces.

4. Method for producing an electrical transversal flux machine according to one or more of the preceding claims, having a magnet wheel (1) which is in the form of an external rotor (2) or internal rotor (57) and has at least one magnetic return path ring (7) which has a longitudinal axis (27, 39, 52) and on which permanent magnets (3, 31, 44, 58) with alternating magnetic polarity (14, 32) are arranged with an angular offset, the said method comprising the following steps:
- arranging magnetizable magnetic flux pieces (24) on at least two magnetic return path ring elements (50, 51), wherein the magnetic return path ring elements (50, 51) have a rotation-prevention means (53') and a centring apparatus (54') in order to be positioned in relation to one another, and wherein the rotation-prevention means (53') and the centring apparatus (54') are formed by an axially extending centring mandrel (53) on in each case one of the magnetic return path ring elements (50, 51) and a centring opening (54), which is associated with the respective centring mandrel (53), on the respectively other one of the magnetic return path ring elements (50, 51),
- magnetizing the magnetic flux pieces (24) of the magnetic return path ring elements (50, 51) to form permanent magnets (3, 31, 44, 58) in each case with the same magnetic polarities,
- aligning the magnetic return path ring elements (50, 51) with the permanent magnets (3, 31, 44, 58) in relation to one another by inserting the centring mandrels (53) into the respective centring opening (54), and
- joining the magnetic return path ring elements (50, 51) with the permanent magnets (3, 31, 44, 58) to the magnet wheel (1) in such a way that the alternating magnetic polarity (14, 32) is formed.

5. Method according to Claim 4, **characterized in that** the magnetic flux pieces (24) are arranged, in their longitudinal extent, axially on the magnetic return path ring elements (50, 51).

6. Method according to one of the preceding claims, **characterized in that** the magnetic flux pieces (24) are arranged on the outer circumference (15, 59) and/or over the inner circumference (4) of the magnetic return path ring elements (50, 51).

7. Method according to one of the preceding claims, **characterized in that** the magnetic flux pieces (24) are arranged by means of a holding template (21, 22) in particular at the same time.

8. Method according to one of the preceding claims, **characterized in that** the magnetic flux pieces (24) of in each case one of the magnetic return path ring elements (50, 51) are magnetized at the same time.

9. Method according to one of the preceding claims, **characterized in that** the magnetic return path ring elements (50, 51) with the magnetized magnetic flux pieces (24) are aligned with one another by means of a mounting apparatus (66) before being joined.

10. Method according to one of the preceding claims, **characterized in that** at least one centring apparatus is used as the mounting apparatus (66).

11. Method according to one of the preceding claims, **characterized in that** a guide ring (63) which has guide grooves (64) for the magnetic flux pieces (24) in the circumferential direction is used as the mounting apparatus (66).

## Revendications

1. Machine électrique à flux transversal comprenant une roue polaire (1) réalisée sous forme de rotor extérieur (2) ou de rotor intérieur (57), qui possède au moins une bague de reflux (7) présentant un axe longitudinal (27, 39, 52), sur laquelle sont disposés des aimants permanents décalés angulairement (3, 31, 44, 58) avec une polarité magnétique alternée (14, 32), la bague de reflux (7) présentant au moins deux bagues partielles de reflux assemblées (50, 51) juxtaposées axialement et les aimants permanents (3, 31, 44, 58) étant situés sur une bague partielle de reflux (50, 51) lors de l'assemblage des deux bagues partielles de reflux (50, 51) dans les espaces (17) entre les aimants permanents (3, 31, 44, 58) de l'autre bague partielle de reflux (50, 51), **caractérisée en ce que** les bagues partielles de reflux (50, 51) présentent une fixation antirotation (53') et un dispositif de centrage (54') en vue de leur positionnement l'une par rapport à l'autre, et la fixation antirotation (53') et le dispositif de centrage (54') sont formés par un mandrin de centrage (53) s'étendant axialement au niveau d'une respective des bagues partielles de reflux (50, 51) et par une ouverture de centrage (54) associée au mandrin de centrage respectif (53) sur l'autre respective des bagues partielles de reflux (50, 51).

2. Machine électrique selon la revendication 1, **caractérisée en ce que** les aimants permanents (3, 31, 44, 58) sont des aimants cylindriques (8), en particulier des aimants cylindriques rectangulaires (9).

3. Machine électrique selon l'une quelconque des revendications précédentes, **caractérisée en ce qu'**au moins l'une des bagues partielles de reflux (50, 51) est assemblée à partir de plusieurs pièces de segments annulaires.

4. Procédé de fabrication d'une machine électrique à flux transversal selon l'une quelconque ou plusieurs des revendications précédentes, comprenant une roue polaire (1) réalisée sous forme de rotor extérieur (2) ou de rotor intérieur (57), qui possède au moins une bague de reflux (7) présentant un axe longitudinal (27, 39, 52), sur laquelle sont disposés des aimants permanents décalés angulairement (3, 31, 44, 58) avec une polarité magnétique alternée (14 32), comprenant les étapes suivantes :
- agencement de pièces de flux magnétique magnétisables (24) sur au moins deux bagues partielles de reflux (50, 51), les bagues partielles de reflux (50, 51) présentant une fixation antirotation (53') et un dispositif de centrage (54') en vue de leur positionnement l'une par rapport à l'autre et la fixation antirotation (53') et le dispositif de centrage (54') étant formés par un mandrin de centrage (53) s'étendant axialement au niveau d'une respective des bagues partielles de reflux (50, 51) et par une ouverture de centrage (54) associée au mandrin de centrage respectif (53) sur l'autre respective des bagues partielles de reflux (50, 51),
- magnétisation des pièces de flux magnétique (24) des bagues partielles de reflux (50, 51) pour donner des aimants permanents (3, 31, 44, 58) ayant chacun des polarités magnétiques identiques,
- orientation des bagues partielles de reflux (50, 51) avec les aimants permanents (3, 31, 44, 58) les unes par rapport aux autres par introduction des mandrins de centrage (53) dans l'ouverture de centrage respective (54) et
- assemblage des bagues partielles de reflux (50, 51) avec les aimants permanents (3, 31, 44, 58) pour former la roue polaire (1) de telle sorte que la polarité magnétique alternée (14, 32) soit formée.

5. Procédé selon la revendication 4, **caractérisé en ce que** les pièces de flux magnétique (24) sont disposées dans leur étendue longitudinale axialement sur les bagues partielles de reflux (50, 51).

6. Procédé selon l'une quelconque des revendications précédentes, **caractérisé en ce que** les pièces de flux magnétique (24) sont disposées sur la périphérie extérieure (15, 59) et/ou sur la périphérie intérieure (4) des bagues partielles de reflux (50, 51).

7. Procédé selon l'une quelconque des revendications précédentes, **caractérisé en ce que** les pièces de flux magnétique (24) sont disposées au moyen d'un gabarit de fixation (21, 22), notamment simultanément.

8. Procédé selon l'une quelconque des revendications précédentes, **caractérisé en ce que** les pièces de flux magnétique (24) à chaque fois de l'une des bagues partielles de reflux (50, 51) sont magnétisées simultanément.

9. Procédé selon l'une quelconque des revendications précédentes, **caractérisé en ce que** les bagues partielles de reflux (50, 51) sont orientées l'une par rapport à l'autre avec les pièces de flux magnétique magnétisées (24) au moyen d'un dispositif de montage (66) avant l'assemblage.

10. Procédé selon l'une quelconque des revendications précédentes, **caractérisé en ce que** l'on utilise comme dispositif de montage (66) au moins un dispositif de centrage.

11. Procédé selon l'une quelconque des revendications précédentes, **caractérisé en ce que** l'on utilise comme dispositif de montage (66) une bague de guidage (63) présentant dans la direction périphérique des rainures de guidage (64) pour les pièces de flux magnétique (24).
